# EUROPEAN PATENT APPLICATION

(11) **EP 1 865 503 A2**
(43) Date of publication of application: **12.12.2007**
(21) Application number: 06014931.7
(22) Date of filing: 18.07.2006
(51) Int. Cl.: G11B 7/0065, G03H 1/04

(54) **Processing apparatus, recording and reproducing methods for holographic optical data**

(30) Priority: 07.06.2006 KR 20060051123
(71) Applicant: Daewoo Electronics Corporation, Seoul (KR)
(72) Inventor: Kim, Kun-Yul, Gunpo-si Gyeonggi-do (KR)
(74) Representative: Thun, Clemens

(57) **Abstract**

An optical information processing apparatus includes: a light source; a reference beam guiding optical system guiding a reproducing reference beam emitted from the light source to an optical information storage medium in which optical information is recorded at multiplexing angles; a signal beam guiding optical system guiding a reproduced signal beam, which is reproduced from the optical information storage medium in the coaxial line with the reproducing reference beam and in the opposite direction of the traveling direction of the reproducing reference beam and is a phase-conjugation wave of a recording signal beam used at the time of recording the optical information; and an optical information detector detecting the reproduced signal beam guided by the signal beam guiding optical system. Accordingly, it is possible to reduce the manufacturing cost, to enhance the multiplexing density of optical information, and to simplify and miniaturize the entire optical information processing apparatus.

## Description

### BACKGROUND

### 1. Technical Field

The present invention relates to an optical information processing apparatus and optical information recording and reproducing methods, and more particularly, to an optical information processing apparatus for recording and reproducing optical information by the use of phase-conjugation waves and optical information recording and reproducing methods using the optical information processing apparatus.

### 2. Related Art

Examples of an optical data processing apparatus can include a digital versatile disc (DVD), a high definition DVD (HD-DVD), a blue-ray disc (BD), a near-field optical information processing apparatus, and a holographic optical information processing apparatus.

The holographic optical information processing apparatus stores data in a storage medium by irradiating an optically modulated signal beam (or also referred to as an information beam) and a reference beam to the storage medium. Here, the reference beam forms an interference fringe in the storage medium through intersection with the signal beam. The holographic optical information processing apparatus reproduces data by irradiating the reference beam to the interference fringe of the storage medium.

The holographic optical information processing apparatus can store data in a multiplexing manner by irradiating the reference beam to one beam spot at different angles, thereby enhancing the recording capacity of the storage medium. The multiplexed recorded data can be output by irradiating the reference beam at the different angles at the time of reproducing the data. Such multiplexing input and output methods are called an angular multiplexing technique.

Known angular multiplexing techniques are disclosed in "Holographic Memories" published in "Scientific American" in November of 1995 by Demetri Psaltis et al. and U.S. Examined Patent Publication No. US2006/0001936, entitled "Angel Multiplexing Holographic Storage Device and Method," filed by Chen, and published on January 5, 2006.

In the known techniques, the reference beam for angular multiplexing is guided between an objective lens and a storage medium, and the angular multiplexing operation is performed within allowable angles between the objective lens and the storage medium. When the multiplexing technique is used to enhance the recording density of optical information, the objective lens should have a large numerical aperture (NA) and should perform high-performance Fourier transformation. However, as the numerical aperture of the objective lens increases, a distance between the storage medium and the objective lens decreases. When the angular multiplexing operation is performed, the distance between the objective lens and the storage medium is actually several millimeters. Accordingly, because of the small distance between the objective lens and the storage medium, it is very difficult to irradiate the reference beam at multiplexing angles. That is, the allowable range of angles for the angular multiplexing operation is very restricted, thereby restricting the decrease in size of the total system.

Another known angular multiplexing technique is disclosed in U.S. Unexamined Patent Publication No. US2005/0030875, filed by Hideyoshi et al. and entitled "Optical Information Recording Apparatus and Optical Information Reproducing Apparatus." In the technique suggested by Hideyoshi et al., a reference beam and a signal beam are irradiated to an objective lens in a coaxial line with each other. The reference beam and the signal beam are spatially separated by the objective lens. Accordingly, it is not necessary to irradiate the reference beam to the narrow space between the objective lens and the storage medium.

However, since the reference beam and the signal beam should be spatially separated from each other, the numerical aperture of the objective lens should be larger the performance of Fourier transformation should be more excellent than that in the technique suggested by Chen. The objective lens having a large numerical aperture has a difficulty in manufacturing thereof and is very expensive. A scan range of the reference beam is very restrictive, thereby making it difficult to secure a plurality of multiplexing angles.

On the other hand, a technique using a phase-conjugation wave is known as a technique for enhancing reproduction efficiency of optical information. It is mentioned in OPTICS LETTERS Vol. 15, No. 7, p499-501, published on April 1, 2000 that it is possible to minimize a phase error at the time of reproducing optical information and to use a low-performance lens, by using by using the phase-conjugation wave to reproduce the optical information. Another technique using a phase-conjugation wave is disclosed in U.S. Patent No. 7,023,786, issued to Itoh et al. and entitled "Hologram Recording and Reproducing Apparatus." In the technique suggested by Itoh et al., since it is difficult to actually manufacture a phase-conjugation mirror, a conjugation nature is provided by irradiating a reference beam for reproducing optical information to a storage medium in a direction symmetric about that at the time of recording the optical information.

However, in the technique suggested by Itoh et al., a traveling path of the reference beam at the time of reproducing optical information detours the traveling path of the reference beam at the time of recording optical information. Accordingly, the decrease in size of the total system is restricted. In addition, since it is difficult to use a rotating mirror for angular multiplexing in order to maintain the symmetric conjugation nature as in the technique suggested by Itoh et al., it is difficult to accomplish the control and the decrease in size of the system.

### SUMMARY

An object of the invention is to provide an optical information processing apparatus in which a reference beam is allowed to travel in the coaxial line with a signal beam and a phase-conjugation wave is used to reproduce optical information, and optical information recording and reproducing methods using the optical information processing apparatus.

According to an aspect of the invention, there is provided an optical information processing apparatus comprising: a light source; a reference beam guiding optical system guiding a reproducing reference beam emitted from the light source to an optical information storage medium in which optical information is recorded at multiplexing angles; a signal beam guiding optical system guiding a reproduced signal beam, which is reproduced from the optical information storage medium in the coaxial line with the reproducing reference beam and in the opposite direction of the traveling direction of the reproducing reference beam and is a phase-conjugation wave of a recording signal beam used at the time of recording the optical information; and an optical information detector detecting the reproduced signal beam guided by the signal beam guiding optical system.

According to another aspect of the invention, there is provided an optical information reproducing method comprising: multiplexing a reproducing reference beam emitted from a light source at a plurality of angles; irradiating the multiplexed reproducing reference beam to an optical information storage medium, in which optical information is recorded, in the coaxial line with a recording reference beam used at the time of recording the optical information in the optical information storage medium and in the opposite direction of the traveling direction of the recording reference beam; and detecting a reproduced signal beam which is reproduced from the optical information storage medium and is a phase-conjugation wave of a recording signal beam used at the time of recording the optical information.

According to another aspect of the invention, there is provided an optical information recording and reproducing method, wherein optical information is recorded in an optical information storage medium by irradiating a recording signal beam loaded with optical information and a recording reference beam to an optical information storage medium in the opposite directions, and wherein a reproduced signal beam, which is a phase-conjugation wave reproduced in the opposite direction of the traveling direction of the recording signal beam, is detected from the optical information storage medium by irradiating a reproducing reference beam to the optical information storage medium in the coaxial line with the recording signal beam and in the opposite direction of the traveling direction of the recording reference beam.

### BRIEF DESCRIPTION OF THE DRAWINGS

The above and other features and advantages of the present invention will become more apparent by describing in detail exemplary embodiments thereof with reference to the attached drawings in which:
Fig. 1 is a diagram illustrating a configuration of an optical information processing apparatus according to an exemplary embodiment of the invention;
Fig. 2 is a diagram illustrating a configuration of an optical information processing apparatus according to another exemplary embodiment of the invention, in which an optical information recording operation is shown; and
Fig. 3 is a diagram illustrating a configuration of an optical information processing apparatus according to another exemplary embodiment of the invention, in which an optical information reproducing operation is shown.

### DESCRIPTION OF EXEMPLARY EMBODIMENTS

Hereinafter, an optical information processing apparatus according to an exemplary embodiment of the present invention will be described with reference to the attached drawings. The following optical information processing apparatus can be embodied as an optical information reproducing apparatus by excluding the structure of an optical detector, while the optical information processing apparatus can be embodied as an optical information recording apparatus by excluding the structure of a light modulator and partially modifying the structure of an optical system. Accordingly, in the following description, the optical information processing apparatus will be described without distinguishing the recording apparatus and the reproducing apparatus.

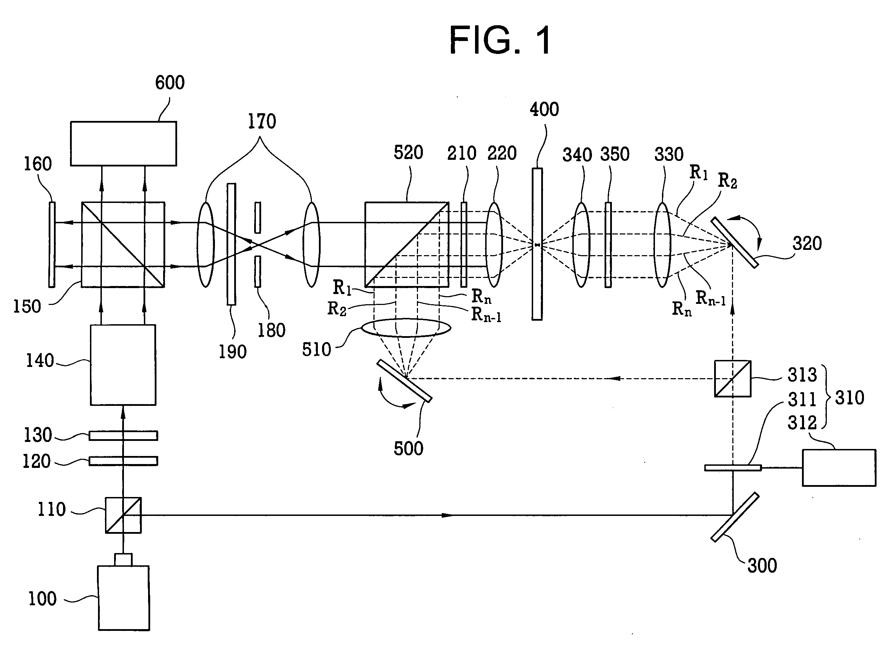

Fig. 1 is a diagram illustrating a configuration of an optical information processing apparatus according to an exemplary embodiment of the invention.

As shown in Fig. 1, the optical information processing apparatus according to an exemplary embodiment of the invention includes a light source 100. A beam emitted from the light source 100 travels to a source-beam polarizing beam splitter 110. The source-beam polarizing beam splitter 110 splits the beam emitted from the light source 100 to an S polarized beam and a P polarized beam. The P polarized beam split by the source-beam polarizing beam splitter 110 becomes a signal beam while passing through a signal beam guiding optical system, and the S polarized beam becomes a reference beam while passing through a reference beam guiding optical system.

The signal beam guiding optical system includes a split-beam half-wavelength plate 120 converting the P polarized beam passing through the source-beam polarizing beam splitter 110 into a S polarized beam and a shutter 130 disposed next to the split-beam half-wavelength plate 120. The shutter 130 is opened at the time of recording optical information and is closed at the time of reproducing optical information. A beam expander 140 is disposed next to the shutter 130. The beam expander 140 expands the S polarized beam to such a magnitude that optical information can be loaded to the S polarized beam, and includes a plurality of lens.

A signal beam reflecting member 150 is disposed next to the beam expander 140. In the exemplary embodiment of the invention, the signal beam reflecting member 150 is embodied as a polarizing beam splitter with a cubic shape, which transmits the P polarized beam and reflects the S polarized beam. However, the signal beam reflecting member 150 may be embodied as a different type of polarizing mirror which selectively transmits and reflects beams depending upon polarization components thereof.

A reflecting spatial light modulator 160 is disposed in the traveling path of the S polarized beam reflected by the signal-beam reflecting member 150. The reflecting spatial light modulator 160 may be embodied as a thin film transistor liquid crystal display device (TFT LCD), a super twisted nematic (STN) LCD, a ferroelectric LCD, a polymer dispersed (PD) LCD, or a plasma addressing (PA) LCD, which includes a reflecting mirror (not shown) and a wavelength plate (not shown) such as a half-wavelength plate changing the polarization direction. Alternatively, a digital micro mirror device (DMD) may be used along with a half-wavelength plate.

The S polarized beam entering the spatial light modulator 160 is loaded with optical information and then is converted into a P polarized beam, thereby serving as a signal beam. The signal beam travels to the signal beam reflecting member 150 and the signal beam reflecting member 150 transmits the signal beam. A pair of focusing lenses 170, and an aperture 180 and a signal-beam half-wavelength plate 190 interposed between the focusing lenses 170 are disposed next to the signal beam reflecting member 150. Accordingly, the polarization component of the signal beam is changed while passing through the signal-beam half-wavelength plate 190.

A reference beam reflecting member 520 is disposed next to the focusing lenses 170. The reference beam reflecting member 520 is described later. A first quarter-wavelength plate 210 is disposed next to the reference beam reflecting member 520. The first quarter-wavelength 210 converts the signal beam traveling toward an optical information storage medium 400 into an S circularly polarized beam. A signal-beam objective lens 220 is disposed next to the first quarter-wavelength plate 210. The signal-beam objective lens 220 performs Fourier transformation to a recording signal beam and the irradiates the transformed signal beam to the optical information storage medium 400.

On the other hand, a reference-beam guiding optical system is disposed in the traveling path of the reference beam reflected by the source-beam polarizing beam splitter 110. The reference-beam guiding optical system includes a reflecting mirror 300 reflecting the reference beam and a reference beam selecting member 310 selecting the traveling path of a recording reference beam and the traveling path of a reproducing reference beam.

The reference beam selecting member 310 includes a half-wavelength plate 311 converting the S polarized beam split and reflected by the source-beam polarizing beam splitter 110 into a P polarized beam at the time of recording optical information and maintaining the S polarized beam at the time of reproducing optical information. The reference beam selecting member 310 further includes an actuator 312 revolving the half-wavelength plate 311 to adjust the polarization direction and a reference-beam selecting polarizing beam splitter 313 reflecting the S polarized beam and transmitting P polarized beam. Accordingly, the recording reference beam and the reproducing reference beam have the traveling directions perpendicular to each other.

On the other hand, a first rotating mirror 320 is disposed in the traveling path of the recording reference beam passing through the reference beam selecting member 310. The first rotating mirror 320 is disposed in a line coaxial with the traveling line of the signal beam and at a position opposite to the traveling position of the signal beam about the optical information storage medium 400. The first rotating mirror 320 reflects the recording reference beam at a plurality of multiplexing angles R1, R2, ..., Rn-1, and Rn (where n is the number of angular multiplexing operations). A first guide lens 330 guiding the multiplexed reference beam and a reference-beam objective lens 340 performing a Fourier transformation process to the reference beam passing through the first guide lens 330 are disposed next to the first rotating mirror 320. A second quarter-wavelength plate 350 is disposed between the first guide lens 330 and the reference-beam objective lens 340.

Accordingly, the recording reference beam passing through the second quarter-wavelength plate 350 is converted into the S circularly polarized beam and then enters the optical information storage medium 400. That is, the signal beam and the reference beam are coaxial with each other and enter the optical information storage medium 400 in the opposite directions with the same polarization component, thereby recording the optical information.

On the other hand, a second rotating mirror 500 and a second guide lens 510 are disposed in the traveling path of the reproducing reference beam reflected by the reference beam selecting member 310. The second rotating mirror 500 is disposed so as to reflect the reference beam in the traveling direction of the signal beam. The second rotating mirror 500 reflects the reference beam at a plurality of multiplexing angles R1, R2, ..., Rn-1, and Rn (where n is the number of angular multiplexing operations). The reference beam reflecting member 520 is disposed in the traveling path of the signal beam which the recording reference beam reflected by the second rotating mirror 500 enters. The first quarter-wavelength plate 210 and the signal-beam objective lens 220 are sequentially disposed in the traveling path of the reference beam reflected by the reference beam reflecting member 520.

In the exemplary embodiment of the invention, the reference beam reflecting member 520 is embodied as a cubic-shaped polarizing beam splitter transmitting a P polarized beam and reflecting an S polarized beam. However, the reference beam reflecting member 520 may be embodied as a different type of polarizing mirror selectively transmitting and reflecting polarized beams depending upon polarization components thereof. Accordingly, the reference beam reflecting member 520 reflects the reference beam, which is the S polarized beam, toward the optical information storage medium 400 at a right angle.

On the other hand, an optical information detector 600 detecting a reproduced signal beam, which is a phase-conjugation-wave beam emitted from the optical information storage medium 400 in the opposite direction of the incident direction of the recording signal beam and in the coaxial line with the incident line of the recording signal beam, is disposed at the position perpendicular to the spatial light modulator 160 about the signal beam reflecting member 150. The optical information detector 600 may be a charge-coupled device (CCD), a complementary metal-oxide semiconductor (CMOS) device, or an optical element capable of detecting a beam.

Hereinafter, optical information recording and reproducing methods in the optical information processing apparatus according to the exemplary embodiment of the invention will be described.

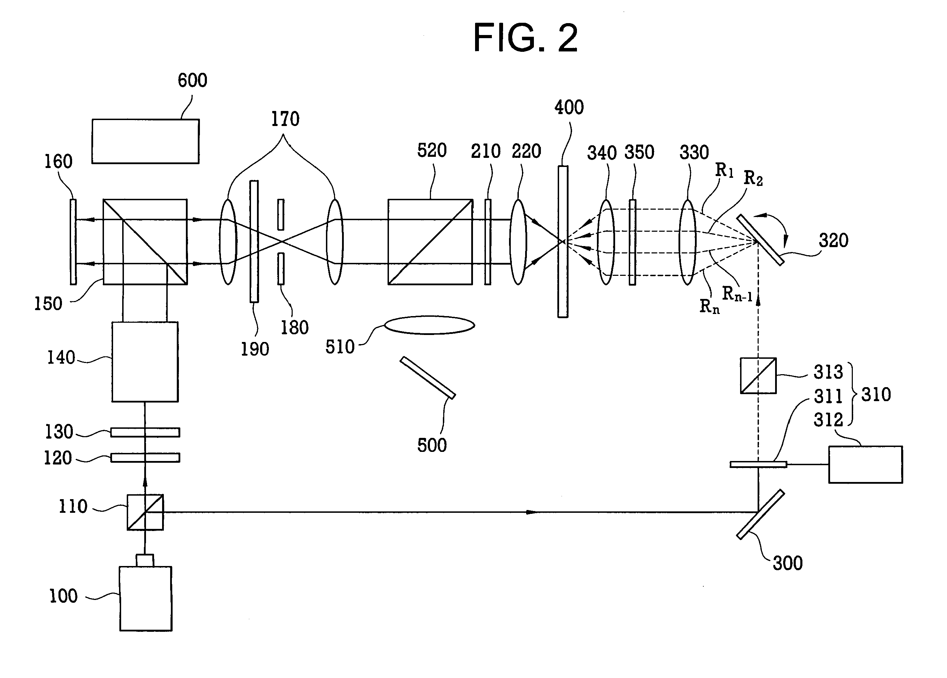

An optical information recording method according to an exemplary embodiment of the invention is now described. Fig. 2 is a diagram illustrating a configuration of an optical information processing apparatus according to another exemplary embodiment of the invention, in which an optical information recording operation is shown.

As shown in Fig. 2, the light source 100 emits a beam with a predetermined wavelength. The beam travels to the source-beam polarizing beam splitter 110. The source-beam polarizing beam splitter 110 transmits a P polarized beam and reflects an S polarized beam. Thereafter, the P polarized beam passing through the source-beam polarizing beam splitter 110 is converted into an S polarized beam by the split-beam half-wavelength plate 120, is expanded by the beam expander 140, and then travels to the signal beam reflecting member 150. The signal beam reflecting member 150 reflects the S polarized beam and irradiates the reflected S polarized beam to the spatial light modulator 160. The spatial light modulator 160 loads the S polarized beam with optical information and converts the S polarized beam into a P polarized beam. The P polarized beam serves as a recording signal beam. The recording signal beam reflected by the spatial light modulator 160 then travels through the signal beam reflecting member 150.

The recording signal beam passing through the signal beam reflecting member 150, the focusing lens 170, the signal-beam half-wavelength plate 190, the aperture 180, the focusing lens, and the reference beam reflecting member 520. The recording signal beam is converted into an S circularly polarized beam by the first quarter-wavelength plate 210. Subsequently, the signal beam is subjected to the Fourier transform process by the signal-beam objective lens 220 and then is incident on the optical information storage medium 400.

On the other hand, the recording reference beam which is the P polarized beam passing through the reference beam selecting member 310 is reflected at a predetermined reflection angle by the first rotating mirror 320. The recording reference beam reflected by the first rotating mirror 310 enters the optical information storage medium 400 through the first guide lens 330, the second quarter-wavelength plate 350, and the reference-beam objective lens 340. At this time, the recording reference beam is converted into the S circularly polarized beam by the second quarter-wavelength plate 350 and then enters the optical information storage medium 400 in the opposite direction of the incident direction of the recording signal beam and with the same polarization component as the recording signal beam.

At the time of recording the optical information by means of angular multiplexing, the incident angle of the recording reference beam is multiplexed by multiplexing the first rotating mirror 320 at a plurality of predetermined angles R1, R2, ..., Rn-1, and Rn (where n is the number of angular multiplexing operations). Then, all the multiplexed reference beams are scanned at the multiplexing angles set by the first guide lens 330 and the reference-beam objective lens 340 and then is incident on the optical information storage medium 400, as described above.

In this way, the signal beam and the reference beam are incident on the optical information storage medium 400 in the coaxial line, in the opposite directions, and with the same polarization component, thereby recording the optical information loaded into the signal beam in the optical information storage medium 400. Accordingly, since it is not necessary to spatially separate the signal beam and the reference beam in one objective lens at the time of recording the optical information, it is not necessary to use an objective lens having a large numerical aperture (NA). Since it is not necessary to irradiate the reference beam in the limited width between a lens and the optical information storage medium 400, the multiplexing range of incident angle is much widened. This means that the angle for angular multiplexing can be variously varied and the gap between the multiplexing angles can be increased. Accordingly, by multiplexing the reference beam at a variety of angles, it is possible to enhance the multiplexing density of optical information and to increase the gap between the multiplexing angles. As a result, a selection range for a null position for recording can be widened.

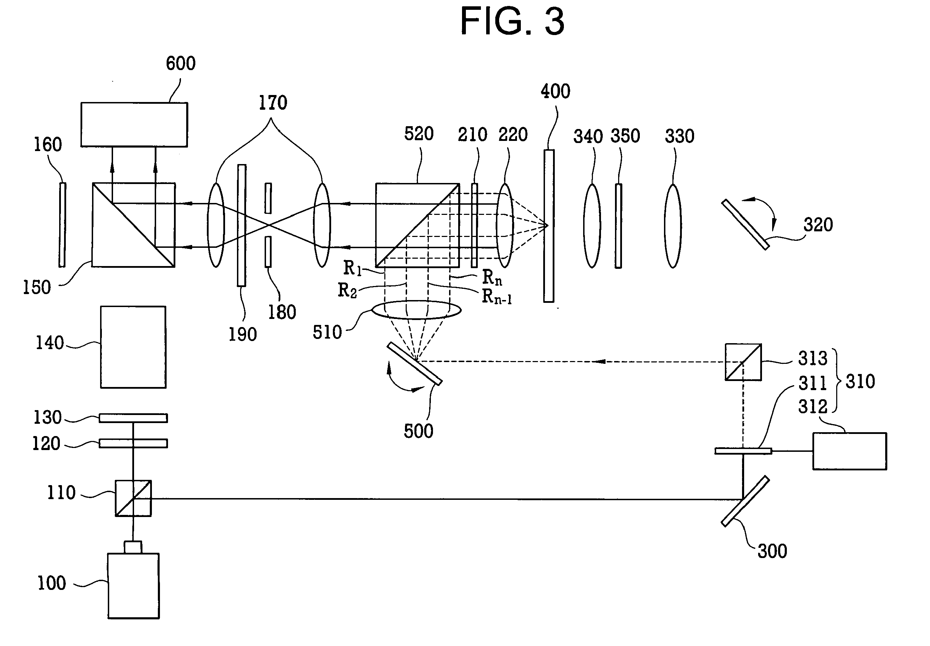

Next, an optical information reproducing method will be described. Fig. 3 is a diagram illustrating a configuration of an optical information processing apparatus according to another exemplary embodiment of the invention, and illustrates an optical information reproducing operation.

As shown in Fig. 3, a beam with a predetermined wavelength is emitted from the light source 100 after shutting the shutter 130. The beam travels to the source-beam polarizing beam splitter 110. The source-beam polarizing beam splitter 110 transmits a P polarized beam and reflects an S polarized beam. The P polarized beam passing through the source-beam polarizing beam splitter 110 is blocked by the shutter 130 and travels no more.

Accordingly, only the reference beam which is the S polarized beam split by the source-beam polarizing beam splitter 110 travels ahead. When the reference beam reaches the reference beam selecting member 310, the half-wavelength plate 311 of the reference beam selecting member 310 maintains the polarization component of the reference beam. Accordingly, the reproducing reference beam is reflected toward the second rotating mirror 500 by the reference-beam selecting polarizing beam splitter 313.

The second rotating mirror 500 reflects the reproducing reference beam at a predetermined angle. The reproducing reference beam reflected by the second rotating mirror 500 is guided to the reference beam reflecting member 520 through the second guide lens 510. The reference beam reflecting member 520 reflects the reproducing reference beam at a right angle.

The reproducing reference beam reflected by the reference beam reflecting member 520 is converted into the S circularly polarized beam by the first quarter-wavelength plate 210 and then the reproducing reference beam which is a phase-conjugation wave of the recording reference beam is incident on the optical information storage medium 400 through the objective lens 220.

On the other hand, at the time of reproducing optical information, by multiplexing the second rotating mirror 500 at the angles set at the time of recording optical information, the incident angle of the reproducing reference beam is multiplexed into a plurality of multiplexing angles R1, R2, ..., Rn-1, and Rn (where n is the number of angular multiplexing operations). The multiplexed reference beams are scanned by the second guide lens 510 and the reference-beam reflecting member 520 and then is incident on the optical information storage medium 400 at the multiplexing angles.

The optical information recorded in the optical information storage medium 400 generates a reproduced signal beam, which is a phase-conjugation wave of the recording signal beam, in the coaxial line with the recording signal beam and in the opposite direction of the traveling direction of the recording signal beam in response to by the incident reproducing reference beams at the time of reproducing the optical information. The reproduced signal beam which is a phase-conjugation wave is an S circularly polarized beam. Accordingly, the reproduced signal beam is converted into the P polarized beam by the first quarter-wavelength plate 210, passes through the reference beam reflecting member 520, and is converted again into the S polarized beam by the focusing lens 170 and the signal-beam half-wavelength plate 190. Accordingly, the reproducing signal beam is reflected by the signal beam reflecting member 150 and is detected by the optical information detector 510.

When the optical information is reproduced in this way, the reproducing reference beam is in the coaxial line with the reproduced signal beam and the opposite direction of the traveling direction of the reproduced signal beam. Accordingly, noises due to the scattering of the reference beams are little detected by the optical information detector 510. Therefore, it is possible to enhance the signal-to-noise ratio of the optical information and thus improving the reproducing efficiency of the optical information. Since the reproduced signal beam is the phase-conjugation wave of the recording signal beam, it is possible to use an objective lens with a small numerical aperture.

The optical information processing apparatus according to the exemplary embodiment of the invention can be put into practice in various forms by those skilled in the art by partially modifying the structure or the methods. If the modified examples include the essential elements of the invention, they should be considered as being included in the technical scope of the invention.

In the optical information processing apparatus and the optical information recording and reproducing methods according to the invention, since the signal beam and the reference beam are incident on the optical information storage medium in the coaxial line with each other and in the opposite directions, it is not necessary to spatially separate the signal beam and the reference beam in one lens. Since the reproduced signal beam is the phase-conjugation wave of the recording signal beam, it is not necessary to use an objective lens with a large numerical aperture, thereby reducing the manufacturing cost for the optical information processing apparatus. In addition, by multiplexing the reference beam at a variety of angles, it is possible to enhance the multiplexing density of the optical information. In addition, at the time of reproducing the optical information, noises due to the scattering of the reference beam are little detected by the optical information detector, thereby further enhancing the reproducing efficiency of the optical information. Moreover, it is possible to simplify and miniaturize the entire optical information processing system.

## Claims

1. An optical information processing apparatus comprising:
a light source;
a reference beam guiding optical system guiding a reproducing reference beam emitted from the light source to an optical information storage medium in which optical information is recorded at multiplexing angles;
a signal beam guiding optical system guiding a reproduced signal beam, which is reproduced from the optical information storage medium in the coaxial line with the reproducing reference beam and in the opposite direction of the traveling direction of the reproducing reference beam and is a phase-conjugation wave of a recording signal beam used at the time of recording the optical information; and
an optical information detector detecting the reproduced signal beam guided by the signal beam guiding optical system.

2. The optical information processing apparatus according to claim 1, wherein a spatial light modulator is disposed on one side of the signal beam guiding optical system, and the signal beam guiding optical system guides the recording signal beam modulated by the spatial light modulator to the optical information storage medium in the coaxial line with the reproduced signal beam and in the opposite direction of the traveling direction of the reproduced signal beam.

3. The optical information processing apparatus according to claim 1, wherein the reference beam guiding optical system includes a reference beam selecting member guiding the reproducing reference beam, which is a phase-conjugation wave of the recording reference beam used at the time of recording the optical information, to the optical information storage medium at the time of reproducing the optical information and guiding the recording reference beam in the opposite direction of the traveling direction of the reproducing reference beam at the time of recording the optical information, at a position coaxial with the reproducing reference beam and opposite to a position where the reproducing reference beam is incident on the optical information storage medium.

4. The optical information processing apparatus according to claim 3, wherein the reference beam guiding optical system includes a first rotating mirror reflecting the recording reference beam selected by the reference beam selecting member at multiplexing angles and a second rotating mirror reflecting the reproducing reference beam at the multiplexing angles.

5. The optical information processing apparatus according to claim 4, wherein the reference beam selecting member includes a half-wavelength plate adjusting a polarizing component of a beam and a selecting polarizing beam splitter selectively guiding the beam to the first rotating mirror and the second rotating mirror depending upon the polarizing component of the beam passing through the half-wavelength plate.

6. The optical information processing apparatus according to claim 5, wherein a source-beam polarizing beam splitter splitting the beam emitted from the light source and guiding the split beams to the reference beam guiding optical system and the signal beam guiding optical system is disposed between the light source and the signal beam guiding optical system, and
wherein the signal beam guiding optical system includes a split-beam half-wavelength plate adjusting the polarization component of the split beam split by the source-beam polarizing beam splitter and a shutter regulating the traveling of the split beam.

7. The optical information processing apparatus according to claim 6, wherein the signal beam guiding optical system includes a signal beam reflecting member reflecting the recording signal beam in a direction and reflecting the reproduced signal beam in another direction.

8. The optical information processing apparatus according to claim 6, wherein the spatial light modulator is a reflecting spatial light modulator loading optical information into the split beam reflected by the signal beam reflecting member, changing the polarization component of the split beam, and then reflecting the split beam toward the signal beam reflecting member, and
wherein the signal beam reflecting member transmits the recording signal beam reflected by the spatial light modulator.

9. The optical information processing apparatus according to claim 8, wherein a signal-beam half-wavelength plate changing the polarization components of the recording signal beam and the reproduced signal beam and a signal-beam objective lens guiding the recording signal beam passing through the signal-beam half-wavelength plate to the optical information storage medium are disposed between the signal beam reflecting member and the optical information storage medium.

10. The optical information processing apparatus according to claim 9, wherein a reference beam reflecting member transmitting the signal beam and reflecting the reproducing reference beam having a polarization component different from that of the signal beam toward the optical information storage medium is disposed between the signal-beam objective lens and the signal-beam half-wavelength plate.

11. The optical information processing apparatus according to claim 9, wherein a first quarter-wavelength plate is disposed between the signal-beam objective lens and the reference beam reflecting member and a second quarter-wavelength plate is disposed between the second rotating mirror and the optical information storage medium.

12. An optical information reproducing method comprising:
multiplexing a reproducing reference beam emitted from a light source at a plurality of angles;
irradiating the multiplexed reproducing reference beam to an optical information storage medium, in which optical information is recorded, in the coaxial line with a recording reference beam used at the time of recording the optical information in the optical information storage medium and in the opposite direction of the traveling direction of the recording reference beam; and
detecting a reproduced signal beam which is reproduced from the optical information storage medium and is a phase-conjugation wave of a recording signal beam used at the time of recording the optical information.

13. The optical information reproducing method according to claim 12, wherein the reproducing reference beam and the reproduced signal beam travel in the coaxial line with each other and in the directions opposite to each other.

14. The optical information reproducing method according to claim 12, wherein the multiplexing of the reproducing reference beam comprises multiplexing the reproducing reference beam at a plurality of angles and then guiding the multiplexed reproducing reference beam to the coaxial line with the reproduced signal beam.

15. An optical information recording and reproducing method,
wherein optical information is recorded in an optical information storage medium by irradiating a recording signal beam loaded with optical information and a recording reference beam to an optical information storage medium in the opposite directions, and
wherein a reproduced signal beam, which is a phase-conjugation wave reproduced in the opposite direction of the traveling direction of the recording signal beam, is detected from the optical information storage medium by irradiating a reproducing reference beam to the optical information storage medium in the coaxial line with the recording signal beam and in the opposite direction of the traveling direction of the recording reference beam.

16. The optical information recording and reproducing method according to claim 15, wherein the recording reference beam, the recording signal beam, the reproducing reference beam, and the reproduced signal beam are irradiated to or reproduced from the optical information storage medium in the coaxial line.

17. The optical information recording and reproducing method according to claim 16, wherein the recording reference beam and the reproducing reference beam are multiplexed in a plurality of angles and then are irradiated to the optical information storage medium.

18. The optical information recording and reproducing method according to claim 16, wherein the reproducing reference beam is multiplexed at a plurality of angles and then is guided to the coaxial line.

19. The optical information recording and reproducing method according to claim 16, wherein the recording reference beam and the reproducing reference beam are phase-conjugate each other and the recording signal beam and the reproduced signal beam are phase-conjugate each other.

20. The optical information recording and reproducing method according to claim 16, wherein a polarization component of the reproduced signal beam is changed during traveling in the coaxial line and then the reproduced signal beam is guided and detected in a path out of the coaxial line.
